# EUROPEAN PATENT APPLICATION

(11) **EP 4 181 572 A1**
(43) Date of publication of application: **17.05.2023**
(21) Application number: 21837083.1
(22) Date of filing: 09.06.2021
(51) Int. Cl.: H04W 48/02

(54) **CELL RESELECTION METHOD AND APPARATUS**

(30) Priority: 07.07.2020 CN 202010648577
(71) Applicant: Spreadtrum Communications (Shanghai) Co., Ltd., Shanghai 201203 (CN)
(72) Inventor: CHEN, Xiaoyu, Shanghai 201203 (CN); HAN, Lifeng, Shanghai 201203 (CN)
(74) Representative: Pfenning, Meinig & Partner mbB
(86) International application number: PCT/CN2021/099235
(87) International publication number: WO 2022/007579

(57) **Abstract**

Embodiments of the present application provide a cell reselection method and apparatus. The method includes: receiving, by a terminal device, cell information of a plurality of cells and a model supported by each cell from a first network device; determining, by the terminal device, a first cell from the plurality of cells according to the cell information and the model supported by each cell; and reselecting, by the terminal device, the first cell. The problem that a current cell reselection solution may affect processing of a model related service is solved.

## Description

This application claims priority to China Patent Application No. 2020106485779, filed on July 7, 2020, in China National Intellectual Property Administration and entitled "CELL RESELECTION METHOD AND APPARATUS", the contents of which are hereby incorporated by reference in their entireties.

### TECHNICAL FIELD

Embodiments of the present application relate to the technical field of communication, and particularly to a cell reselection method and apparatus.

### BACKGROUND

When a terminal device is in an idle state, or a cell where the terminal device resides is poor in channel quality, the terminal device is required to perform cell reselection to reside in another cell.

Currently, a cell reselection manner is that a base station may indicate a cell reselection frequency priority to the terminal device through a system message, a Radio Resource Control (RRC) message, or other signaling, and then the terminal device performs measurement for cell reselection at a frequency point of the specified priority according to the cell reselection frequency priority indicated by the base station, and then performs a cell reselection operation.

The terminal device is required to obtain an Artificial Intelligence (AI) model from a cell for processing of a model related service. However, the cell reselection operation may lead to the condition that there is no AI model required by the terminal device on a Radio Access Network (RAN) side of the new cell. As a result, the related service of the AI model is affected, and user experience is reduced.

### SUMMARY

Embodiments of the present application provide a cell reselection method and apparatus, so as to solve the problem that a current cell reselection solution may affect processing of a model related service.

According to a first aspect, an embodiment of the present application provides a cell reselection method, including:
receiving, by a terminal device, cell information of a plurality of cells and a model supported by each cell from a first network device;
determining, by the terminal device, a first cell from the plurality of cells according to the cell information and the model supported by each cell; and
reselecting, by the terminal device, the first cell.

In a possible implementation mode, the receiving cell information of a plurality of cells and a model supported by each cell from a first network device includes:
receiving a broadcast message from the first network device, where the broadcast message includes the cell information and the model supported by each cell.

In a possible implementation mode, the broadcast message is System Information Block (SIB) signaling or a paging message.

In a possible implementation mode, the cell information includes a frequency of the cell and an identifier of the cell.

In a possible implementation mode, the cell information includes the frequency of the cell, and the determining a first cell from the plurality of cells according to the cell information and the model supported by each cell includes:
receiving a cell reselection frequency priority from the first network device; and
determining the first cell from the plurality of cells according to the cell reselection frequency priority, a frequency of each of the plurality of cells, and the model supported by each cell.

In a possible implementation mode, the determining the first cell from the plurality of cells according to the cell reselection frequency priority, a frequency of each of the plurality of cells, and the model supported by each cell includes:
determining a model list of interest of the terminal device, where the model list includes one or more first models; and
determining the first cell from the plurality of cells according to the cell reselection frequency priority, the frequency of each of the plurality of cells, the model supported by each cell, and the model list.

In a possible implementation mode, the determining the first cell from the plurality of cells according to the cell reselection frequency priority, the frequency of each of the plurality of cells, the model supported by each cell, and the model list includes:
determining whether there is at least one second cell according to the model supported by each cell, where the model supported by the second cell includes all of the first models; and
if yes, determining the first cell according to the frequency of each second cell and the cell reselection frequency priority; and
otherwise, determining the first cell from the plurality of cells according to the model supported by each cell and the model list.

In a possible implementation mode, the determining the first cell according to the frequency of each second cell and the cell reselection frequency priority includes:
determining a first frequency of a top priority from the frequency of each second cell according to the cell reselection frequency priority;
obtaining a first measurement result of the second cell whose frequency is the first frequency; and
determining the first cell according to the first measurement result.

In a possible implementation mode, the determining the first cell from the plurality of cells according to the model supported by each cell and the model list includes:
determining, if there is a third cell in the plurality of cells, the first cell from the third cell, where the model supported by each third cell includes at least one first model;
otherwise, obtaining a second measurement result of the plurality of cells, and determining the first cell according to the second measurement result.

In a possible implementation mode, the determining, if there is a third cell in the plurality of cells, the first cell from the third cell includes:
determining a fourth cell from the third cell according to a first model priority in the model list, where the model supported by the fourth cell includes the first model of a top priority in the first model supported by each third cell, and a frequency of a top cell reselection frequency priority in the frequency of each fourth cell is a second frequency;
obtaining a third measurement result of the fourth cell whose frequency is the second frequency; and
determining the first cell according to the third measurement result.

In a possible implementation mode, for any first model, the method further includes:
obtaining model information of the model supported by each cell; and
determining whether the model supported by each cell includes the first model according to the model information.

In a possible implementation mode, the model information includes at least one of the following information:
a type of the model;
an application type of the model;
an application scenario of the model;
a size of the model;
accuracy of the model; and
an index of the model.

According to a second aspect, an embodiment of the present application provides a cell reselection method, including:
obtaining, by a first network device, cell information of a plurality of cells and a model supported by each cell; and
sending, by the first network device, the cell information of the plurality of cells and the model supported by each cell to a terminal device, where the cell information and the model supported by each cell are used to instruct the terminal device to perform cell reselection.

In a possible implementation mode, the sending the cell information of the plurality of cells and the model supported by each cell to a terminal device includes:
sending a broadcast message to the terminal device, where the broadcast message includes the cell information and the model supported by each cell.

In a possible implementation mode, the broadcast message is System Information Block (SIB) signaling or a paging message.

In a possible implementation mode, the cell information includes a frequency of the cell and an identifier of the cell.

In a possible implementation mode, the obtaining cell information of a plurality of cells and a model supported by each cell includes:
sending a model request message to at least one second network device;
receiving a model response message from the at least one second network device, where the model response message includes a model supported by the second network device; and
obtaining the cell information of the plurality of cells and the model supported by each cell according to a model supported by the first network device and the model supported by the second network device, where any one of the plurality of cells is a cell under the first network device or the second network device.

In a possible implementation mode, the sending a model request message to at least one second network device includes:
sending the model request message to the at least one second network device according to a preset time interval.

In a possible implementation mode, the method further includes:
receiving a model update message from the second network device, where the model update message indicates that the model supported by the second network device changes; and
updating, by the first network device, the cell information of the plurality of cells and the model supported by each cell according to the model update message.

According to a third aspect, an embodiment of the present application provides a cell reselection apparatus, including:
a receiving module, configured to receive cell information of a plurality of cells and a model supported by each cell from a first network device;
a determining module, configured to determine a first cell from the plurality of cells according to the cell information and the model supported by each cell; and
a reselecting module, configured to reselect the first cell.

In a possible implementation mode, the receiving module is specifically configured to:
receive a broadcast message from the first network device, where the broadcast message includes the cell information and the model supported by each cell.

In a possible implementation mode, the broadcast message is System Information Block (SIB) signaling or a paging message.

In a possible implementation mode, the cell information includes a frequency of the cell and an identifier of the cell.

In a possible implementation mode, the cell information includes the frequency of the cell; and the determining module is specifically configured to:
receive a cell reselection frequency priority from the first network device; and
determine the first cell from the plurality of cells according to the cell reselection frequency priority, a frequency of each of the plurality of cells, and the model supported by each cell.

In a possible implementation mode, the determining module is specifically configured to:
determine a model list of interest of a terminal device, where the model list includes one or more first models; and
determine the first cell from the plurality of cells according to the cell reselection frequency priority, the frequency of each of the plurality of cells, the model supported by each cell, and the model list.

In a possible implementation mode, the determining module is specifically configured to:
determine whether there is at least one second cell according to the model supported by each cell, where the model supported by the second cell includes all of the first models;
if yes, determine the first cell according to the frequency of each second cell and the cell reselection frequency priority; and
otherwise, determine the first cell from the plurality of cells according to the model supported by each cell and the model list.

In a possible implementation mode, the determining module is specifically configured to:
determine a first frequency of a top priority from the frequency of each second cell according to the cell reselection frequency priority;
obtain a first measurement result of the second cell whose frequency is the first frequency; and
determine the first cell according to the first measurement result.

In a possible implementation mode, the determining module is specifically configured to:
determine, if there is a third cell in the plurality of cells, the first cell from the third cell, where the model supported by each third cell includes at least one first model; and
otherwise, obtain a second measurement result of the plurality of cells, and determine the first cell according to the second measurement result.

In a possible implementation mode, the determining module is specifically configured to:
determine a fourth cell from the third cell according to a first model priority in the model list, where the model supported by the fourth cell includes the first model of a top priority in the first model supported by each third cell, and a frequency of a top cell reselection frequency priority in the frequency of each fourth cell is a second frequency;
obtain a third measurement result of the fourth cell whose frequency is the second frequency; and
determine the first cell according to the third measurement result.

In a possible implementation mode, the receiving module is further configured, for any first model, to:
obtain model information of the model supported by each cell; and
determine whether the model supported by each cell includes the first model according to the model information.

In a possible implementation mode, the model information includes at least one of the following information:
a type of the model;
an application type of the model;
an application scenario of the model;
a size of the model;
accuracy of the model; and
an index of the model.

According to a fourth aspect, an embodiment of the present application provides a cell reselection apparatus, including:
an obtaining module, configured to obtain cell information of a plurality of cells and a model supported by each cell; and
a sending module, configured to send the cell information of the plurality of cells and the model supported by each cell to a terminal device, where the cell information and the model supported by each cell are used to instruct the terminal device to perform cell reselection.

In a possible implementation mode, the sending module is specifically configured to:
send a broadcast message to the terminal device, where the broadcast message includes the cell information and the model supported by each cell.

In a possible implementation mode, the broadcast message is System Information Block (SIB) signaling or a paging message.

In a possible implementation mode, the cell information includes a frequency of the cell and an identifier of the cell.

In a possible implementation mode, the obtaining module is specifically configured to:
send a model request message to at least one second network device;
receive a model response message from the at least one second network device, where the model response message includes a model supported by the second network device; and
obtain the cell information of the plurality of cells and the model supported by each cell according to a model supported by the first network device and the model supported by the second network device, where any one of the plurality of cells is a cell under the first network device or the second network device.

In a possible implementation mode, the obtaining module is specifically configured to:
send the model request message to the at least one second network device according to a preset time interval.

In a possible implementation mode, the obtaining module is further configured to:
receive a model update message from the second network device, where the model update message indicates that the model supported by the second network device changes; and
update, by the first network device, the cell information of the plurality of cells and the model supported by each cell according to the model update message.

According to a fifth aspect, an embodiment of the present application provides a terminal device, including at least one processor and a memory, where
the memory stores a computer-executable instruction; and
the at least one processor executes the computer-executable instruction stored in the memory to enable the at least one processor to execute the cell reselection method as described in the first aspect.

According to a sixth aspect, an embodiment of the present application provides a network device, including at least one processor and a memory, where
the memory stores a computer-executable instruction; and
the at least one processor executes the computer-executable instruction stored in the memory to enable the at least one processor to execute the cell reselection method as described in the second aspect.

According to a seventh aspect, an embodiment of the present application provides a computer-readable storage medium, storing a computer-executable instruction, a processor, when executing the computer-executable instruction, implements the cell reselection methods as described in any one of the first aspect to the second aspect.

According to the cell reselection method and apparatus provided in the embodiments of the present application, a terminal device first receives cell information of a plurality of cells and a model supported by each cell from a first network device, then determines a first cell from the plurality of cells according to the cell information and the model supported by each cell, and reselects the first cell. Since the first cell is determined by the terminal device according to both the cell information and the model supported by each cell, when the terminal device side requires a model to execute a related service, with this solution, the perception of the terminal device to the model may be enhanced, and the terminal device can preferentially select a cell storing the related model and perform a cell reselection operation. Therefore, the problem that a current cell reselection solution may affect processing of a model related service is solved.

### BRIEF DESCRIPTION OF THE DRAWINGS

FIG. 1 is a schematic diagram of an application scenario according to an embodiment of the present application.
FIG. 2 is a signaling diagram of a cell reselection method according to an embodiment of the present application.
FIG. 3 is a signaling diagram of a cell reselection method according to another embodiment of the present application.
FIG. 4 is a schematic diagram of cell reselection according to an embodiment of the present application.
FIG. 5 is a schematic structural diagram of a cell reselection apparatus according to an embodiment of the present application.
FIG. 6 is a schematic structural diagram of a cell reselection apparatus according to an embodiment of the present application.
FIG. 7 is a schematic structural diagram of a terminal device according to an embodiment of the present application.
FIG. 8 is a schematic structural diagram of a network device according to an embodiment of the present application.

### DESCRIPTION OF EMBODIMENTS

In order to make the objectives, technical solutions, and advantages of the embodiments of the present application clearer, the technical solutions in the embodiments of the present application will be described clearly and completely below in combination with the drawings in the embodiments of the present application. Clearly, the described embodiments are not all but part of embodiments of the present application. All other embodiments obtained by those of ordinary skill in the art based on the embodiments in the present application without creative work shall fall within the scope of protection of the present application.

For ease of understanding, terms involved in the present application are explained first.

A terminal device usually has a wireless transceiver function. The terminal device may be deployed on land indoors or outdoors in a handheld, wearable, or vehicular form, or may be deployed above water (for example, in a ship), or may be deployed in the air (for example, on an airplane, a balloon, and a satellite). The terminal device may be a mobile phone, a pad, a computer with a wireless transceiver function, a Virtual Reality (VR) terminal device, an Augmented Reality (AR) terminal device, a wireless terminal for industrial control, a vehicular terminal device, a wireless terminal for self-driving, a wireless terminal device for remote medical, a wireless terminal device for smart grid, a wireless terminal device for transportation safety, a wireless terminal device for smart city, a wireless terminal device for smart home, a wearable terminal device, etc. The terminal device involved in the embodiments of the present application may also be referred to as a terminal, User Equipment (UE), an access terminal device, a vehicular terminal, an industrial control terminal, a UE unit, a LTE station, a mobile station, a mobile radio station, a remote station, a remote terminal device, a mobile device, a UE terminal device, a wireless communication device, a user proxy, a UE device, etc. The terminal device may also be fixed or mobile.

A network device usually has a wireless transceiver function. The network device may be mobile. For example, the network device may be a mobile device. Optionally, the network device may be a satellite and a balloon station. For example, the satellite may be a Low Earth Orbit (LEO) satellite, a Medium Earth Orbit (MEO) satellite, a Geostationary Earth Orbit (GEO) satellite, and a High Elliptical Orbit (HEO) satellite. For example, an orbital altitude of the LEO satellite usually ranges from 500 to 1,500 km, while an orbital period (period of rotation around the earth) is about 1.5 to 2 hours. A signal propagation delay of single-hop communication between users is about 20 ms. A single-hop communication delay between users refers to a transmission delay between a terminal device and a network device, or a delay between the network device and a transmission device. Maximum visibility time of the satellite is about 20 minutes. The maximum visibility time refers to maximum time when a beam of the satellite covers a specific region on the ground. The LEO satellite is mobile relative to the ground, and as the satellite moves, the terrestrial region covered by the satellite also changes. The LEO satellite is short in signal propagation distance and low in link loss, and its requirement for transmit power of the terminal device is not so high. An orbital altitude of the GEO satellite is usually 35,786 km, while an orbital period is 24 hours. A signal propagation delay of single-hop communication between users is about 250 ms. In order to ensure the coverage of the satellite and improve the system capacity of a communication network, the satellite may cover the ground with multiple beams. For example, a satellite may form tens or hundreds of beams to cover the ground. A beam may cover a terrestrial region of a diameter of tens to hundreds of kilometers. Certainly, the network device may be a base station deployed on land, in a water area, or at other positions. For example, the network device may be a next generation NodeB (gNB) or a next generation-evolved NodeB (ng-eNB). The gNB provides a user-plane function and control-plane function of New Radio (NR) for UE. The ng-eNB provides a user-plane function and control-plane function of Evolved Universal Terrestrial Radio Access (E-UTRA) for the UE. It is to be noted that gNB and ng-eNB are merely two names for representing base stations that support 5th-Generation (5G) network systems, and have no restrictive meanings. Alternatively, the network device may be a Base Transceiver Station (BTS) in a Global System for Mobile communication (GSM) or a Code Division Multiple Access (CDMA) system, or a NodeB (NB) in a Wideband Code Division Multiple Access (WCDMA) system, or an Evolved Node B (eNB or eNodeB) in a Long Term Evolution (LTE) system. Alternatively, the network device may be a relay station, an access point, a vehicular device, a wearable device, a network-side device in a network after 5G or a network device in a future involved Public Land Mobile Network (PLMN), a Road Side Unit (RSU), etc.

MEC refers to multi-access edge computing.

OAM refers to operation administration and maintenance.

RRC refers to radio resource control.

RAN refers to radio access network.

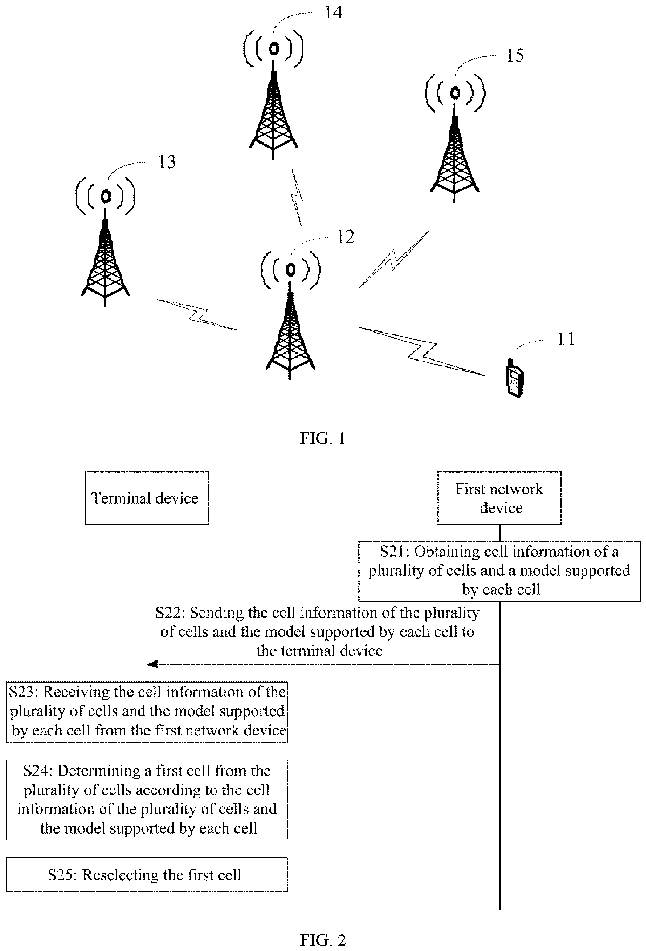

FIG. 1 is a schematic diagram of an application scenario according to an embodiment of the present application. As shown in FIG. 1, a terminal device 11, a first network device 12, and three second network devices are included. The three second network devices are a network device 13, a network device 14, and a network device 15 respectively. There is one or more cells under the first network device 12. There is one or more cells under each of the network device 13, the network device 14, and the network device 15.

In the example shown in FIG. 1, a cell where the terminal device 11 currently resides is cell A under the first network device 12. When the terminal device 11 moves to an edge of cell A, the terminal device 11 is required to perform cell reselection to reside in another cell.

According to a current cell reselection solution, the first network device 12 indicates a cell reselection frequency priority to the terminal device 11 through a system message, an RRC message, or other dedicated signaling, and in addition, the terminal device may obtain a frequency of each cell. After the first network device 12 configures the cell reselection frequency priority for the terminal device 11, the terminal device 11 performs measurement for cell reselection at a frequency of a top priority. When there is a cell satisfying an R criterion of cell reselection at the selected frequency, the terminal device 11 performs a cell reselection operation.

However, an AI function is usually introduced to a current communication architecture to speed up the development of a communication network to automation and intelligence. A proper AI model is required to realize the AI function. A current AI model is limited in generalization, and in addition, the terminal device is also limited in AI model training capability and storage space, so it is necessary to deploy nodes storing AI models in the network device. Transmission of the AI model may require the characteristics of low delay, high reliability, and high rate of the network device, and MEC may meet the transmission requirements of the AI model to some extent. Therefore, storing an AI model on MEC of a RAN side will be a network deployment mode in the future.

AI models stored on MEC of RAN sides of different network devices may be different, and AI models required by different terminal devices may also be different.

Deploying an AI model on a RAN side may affect behaviors of the terminal device. Due to differences between types of AI models deployed in MEC of the RAN side and limits of a service region of the MEC of the RAN side, in the above-mentioned cell reselection solution, performing measurement for cell reselection only according to the cell reselection frequency priority configured by the first network device 12 and performing the cell reselection operation according to a measurement result do not consider whether models supported by various cells include a model required by the terminal device 11. As a result, the above-mentioned solution may lead to the condition that there is no model required by the terminal device 11 on a RAN side of a new cell after the terminal device 11 reselects the new cell to reside in and a service related to the model required by the terminal device 11 is further affected, reducing user experience.

In order to solve the foregoing problem, the present application provides a cell reselection solution. When a terminal device performs cell reselection, models supported by RAN sides of cells are considered on the basis of satisfying a cell reselection criterion. Therefore, the perception of the terminal device to the model is enhanced, the model obtaining success rate of the terminal device is further increased, the model obtaining delay is reduced, and user experience is improved. This solution will be introduced below.

FIG. 2 is a signaling diagram of a cell reselection method according to an embodiment of the present application. As shown in FIG. 2, the following steps are included.

In S21, a first network device obtains cell information of a plurality of cells and a model supported by each cell.

Before a terminal device is required to perform cell reselection, a first network device is required to obtain cell information of a plurality of cells and a model supported by each cell. For example, the first network device may be a base station. When the first network device is a base station, the base station is a base station where a cell the terminal device currently resides in is located, and the plurality of cells may include other cells under the first network device and cells under another network device or base station nearby the first network device. The terminal device may reselect a specific cell of the plurality of cells in subsequent cell reselection.

The model supported by each cell represents that the model is stored in a RAN side of the base station corresponding to the cell. For example, model A is stored in a RAN side of a specific base station, and cell B is a cell under this base station. In such case, a model supported by cell B includes model A. If the terminal device resides in cell B, the terminal device may subsequently communicate with the base station, such as obtaining model A from the RAN side of the base station to process a service related to model A.

The cell information may include a frequency of each cell. In cell reselection, the network device may usually configure a cell reselection frequency priority for the terminal device. Therefore, obtaining the frequency of each cell is also favorable for determining the cell to be reselected in combination with the model supported by the cell.

In S22, the first network device sends the cell information of the plurality of cells and the model supported by each cell to a terminal device, where the cell information and the model supported by each cell are used to instruct the terminal device to perform cell reselection.

In S23, the terminal device receives the cell information of the plurality of cells and the model supported by each cell from the first network device.

After obtaining the cell information of the plurality of cells and the model supported by each cell, the first network device may send the cell information of the plurality of cells and the model supported by each cell. A sending manner may be separate sending, or sending through a broadcast message or in another manner.

In S24, the terminal device determines a first cell from the plurality of cells according to the cell information and the model supported by each cell.

After receiving the cell information and the model supported by each cell, the terminal device comprehensively determines a first cell from the plurality of cells in combination with the cell information and the model supported by each cell.

For example, when the cell information includes a frequency of the cell, the first cell is determined according to the frequency of the cell and the model supported by the cell, so as to ensure that the first cell satisfies each cell reselection criterion while maximally ensuring that the model supported by the first cell includes a model of interest of the terminal device or required by the terminal device.

In S25, the terminal device reselects the first cell.

After determining the first cell from the plurality of cells, the terminal device reselects the first cell.

According to the cell reselection method provided in the embodiment of the present application, the terminal device first receives the cell information of the plurality of cells and the model supported by each cell from the first network device, then determines the first cell from the plurality of cells according to the cell information and the model supported by each cell, and reselects the first cell. Since the first cell is determined by the terminal device according to both the cell information and the model supported by each cell, when the terminal device side requires a model to execute a related service, with this solution, the perception of the terminal device to the model may be enhanced, and the terminal device can preferentially select a cell storing the related model and perform a cell reselection operation. Therefore, the problem that a current cell reselection solution may affect processing of a model related service is solved.

The solution of the present application will be introduced below in combination with the drawings in detail.

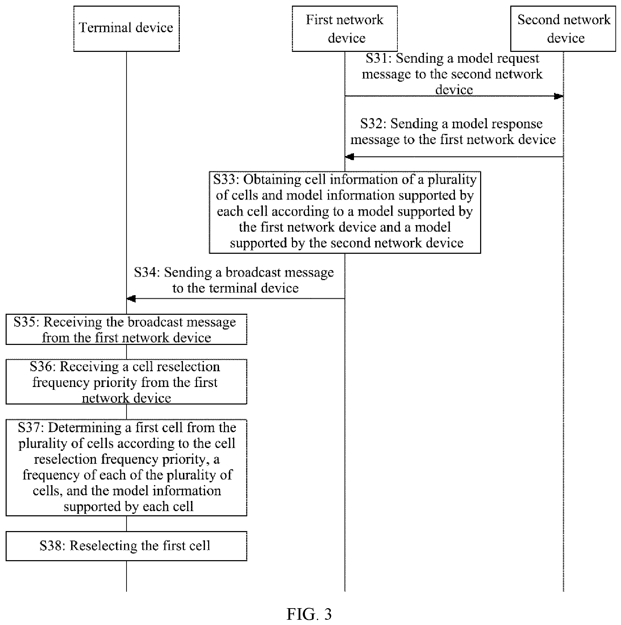

FIG. 3 is a signaling diagram of a cell reselection method according to another embodiment of the present application. As shown in FIG. 3, the following steps are included.

In S31, a first network device sends a model request message to at least one second network device.

After deployment of MEC on a RAN side of each network device is completed, OAM may notify each network device of a model supported by the MEC on its RAN side and model information as a local configuration of the network device.

In S32, the second network device sends a model response message to the first network device.

The first network device receives a model response message from the at least one second network device, where the model response message includes model information supported by the second network device.

The first network device may send the model request message to the second network device and receive the model response message from the second network device to obtain the model information supported by each second network device. For example, the model information supported by the second network device may include a type of a model supported by the second network device, a volume of the size (i.e., a size of the model), accuracy of the model, and other related information. After the model information supported by each second network device is obtained, model information supported by a plurality of cells may be obtained. Any one of the plurality of cells is a cell under the first network device or the second network device. That is, model information supported by the first network device is model information supported by a cell under the first network device, and the model information supported by the second network device is model information supported by a cell under the second network device.

Since the model response message includes the model information supported by the second network device, and different models are determined based on the corresponding model information, the network device supports different models if supporting different model information. When the network device supports different models, it indicates that one or more pieces of model information in the model information supported by the network device are different. The model information supported by the network device is introduced in the following embodiment with the description of model supported by the network device. It can be learned by those skilled in the art that in the following embodiment, the model supported by the network device represents the model information supported by the network device.

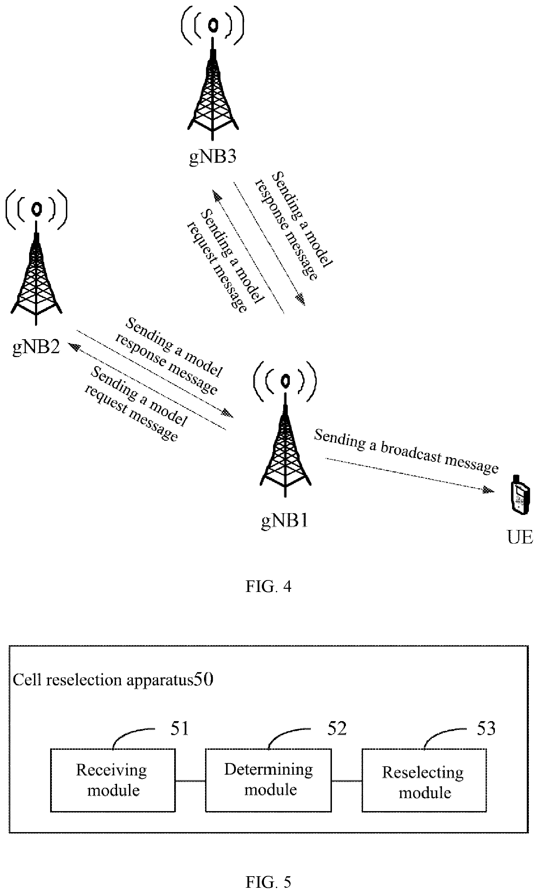

FIG. 4 is a schematic diagram of cell reselection according to an embodiment of the present application. As shown in FIG. 4, UE, gNB 1, gNB2, and gNB3 are included, where the LTE is a terminal device, gNB1 is a first network device, and gNB2 and gNB3 are second network devices. The number of second network devices is not limited. FIG. 4 takes the number of second network devices being 2 as an example for description.

gNB 1 may send a model request message to gNB2 and gNB3 respectively. For example, gNB1 may query and record information about models supported by base stations around (gNB2 and gNB3) through an Xn interface between base stations.

Optionally, the first network device may send the model request message to the second network device in a periodic sending manner. The first network device may send the model request message to the at least one second network device according to a preset time interval. For example, in FIG. 4, gNB 1 may send the model request message to gNB2 and gNB3 every 1s respectively to obtain information about the models supported by gNB2 and gNB3.

Optionally, the first network device, after sending the model request message to the second network device, may re-obtain the model supported by the second network device when the model supported by the second network device is updated. After the model supported by a specific second network device changes, the second network device sends a model update message to the first network device to indicate that the model supported by the second network device changes. After receiving the model update message, the first network device updates cell information of a plurality of cells and a model supported by each cell. Since the model supported by the second network device changes, the cell information of the cell under the second network device and the model supported by the cell are mainly updated.

In S33, the first network device obtains cell information of a plurality of cells and model information supported by each cell according to a model supported by the first network device and a model supported by the second network device, where any one of the plurality of cells is a cell under the first network device or the second network device.

In S34, the first network device sends a broadcast message to a terminal device, where the broadcast message includes the cell information and a model supported by each cell.

The first network device may send a broadcast message to a terminal device to transmit cell information and a model supported by each cell to the terminal device through the broadcast message.

Optionally, the broadcast message may be System Information Block (SIB) signaling.

Optionally, the broadcast message may be a paging message.

Optionally, the cell information may include a frequency of the cell and an identifier of the cell. The first network device may integrate and transmit, to the terminal device, cell information of a plurality of cells and a model supported by each cell.

For example, in FIG. 4, gNB1 integrates and binds, with related cell information, the model information supported by the base stations around. Identifiers of the cells, models supported by the cells, and frequencies of the cells are in one-to-one correspondence.

In S35, the terminal device receives the broadcast message from the first network device, where the broadcast message includes the cell information and the model supported by each cell.

In S36, the terminal device receives a cell reselection frequency priority from the first network device.

In S37, the terminal device determines a first cell from the plurality of cells according to the cell reselection frequency priority, a frequency of each of the plurality of cells, and the model information supported by each cell.

The cell reselection frequency priority is configured by the first network device for the terminal device.

Optionally, the terminal device may determine its own model list of interest, where the model list includes one or more first models. Then, the terminal device determines the first cell from the plurality of cells according to the cell reselection frequency priority, the frequency of each of the plurality of cells, the model supported by each cell, and the model list.

For example, whether there is at least one second cell may be determined according to the model supported by each cell, where the model supported by the second cell includes all of the first models. That is, whether the model supported by a specific cell in the plurality of cells includes all of the first models in the model list is determined first.

Optionally, for any first model, the terminal device may obtain model information of the model supported by each cell, and then determine whether the model supported by each cell includes the first model according to the model information of the model.

Optionally, the model information may include one or more of the following information: a type of the model, an application type of the model, an application scenario of the model, a size of the model, accuracy of the model, and an index of the model. The above-mentioned information is only an example of the model information, and other types of model information may further be included in practice.

If there is at least one second cell, the first cell may be determined according to the frequency of each second cell and the cell reselection frequency priority.

For example, a first frequency of a top priority is determined from the frequency of each second cell according to the cell reselection frequency priority, a first measurement result of the second cell whose frequency is the first frequency is obtained, and the first cell is determined according to the first measurement result.

If there is no second cell, whether there is a third cell in the plurality of cells is determined, where the model supported by each third cell includes at least one first model.

If there is a third cell, the first cell is determined from the third cell.

Optionally, a first model priority is obtained according to the model list, the first model priority indicates a priority of the first model required by the terminal device. Then, a fourth cell is determined from the third cell, where the model supported by the fourth cell includes the first model of a top priority in the first model supported by each third cell, and a frequency of a top cell reselection frequency priority in the frequency of each fourth cell is a second frequency. A third measurement result of the fourth cell whose frequency is the second frequency is obtained. The first cell is determined according to the third measurement result.

If there is no third cell, a second measurement result of the plurality of cells is obtained, and the first cell is determined according to the second measurement result.

Optionally, when there is no second cell in the plurality of cells, the number of models supported by each cell is obtained, and the cell corresponding to the largest number of supported models is determined as the first cell.

If there are a plurality of cells corresponding to the largest number of supported models, the cell that supports models including a first model of a relatively high priority may be preferentially obtained according to the first model priority.

If the priority of the first model in the model supported by each cell is also the same, the first cell may be determined according to the frequency of each cell and the cell reselection frequency priority.

If the frequency of each cell is also the same, the first cell is further determined according to a measurement result of each cell.

Optionally, when the frequency of each cell is also the same, the first cell may be determined according to the model information supported by each cell and a measurement result of each cell. For example, the cell corresponding to a minimum model size and maximum model accuracy is preferred on the basis of satisfying a measurement requirement. No limits are made in the embodiment of the present application.

In S38, the terminal device reselects the first cell.

The solution of the present application will be described below in combination with specific embodiments.

In the embodiment of the present application, a base station where a cell that UE currently resides in is located is gNB 1, and the UE is located at an edge of a specific cell under gNB1, namely a cell reselection operation is to be performed. There are a plurality of candidate base stations where candidate cells around the cell that the LTE resides in are located, where four base stations are at frequency point 1, i.e., gNB2, gNB3, gNB4, and gNB5 respectively, and two base stations are at frequency point 2, i.e., gNB6 and gNB7 respectively. gNB1 indicates that frequency point 1 is of a top frequency priority for cell reselection of the UE. The UE determines an AI model list of interest according to an instruction of an application layer or an operating system, priorities of AI models in the AI model list being reduced sequentially.

A main service region of MEC of the base station side is a cell within coverage of the base station, so a model supported by the MEC of the base station side (or referred to as a RAN side of the base station) is closely related to the base station, which is referred to as a model supported by the base station.

There may be one or more cells under a base station, and after models supported by the base station are determined, models supported by the one or more cells under the base station are also determined, which are the same as those supported by the base station. Therefore, the following embodiment takes the model supported by the base station as an example for description.

Types of AI models supported by the candidate base stations and whether a cell where each candidate base station is located satisfies a measurement criterion for cell reselection refer to the following table 1.

**Table 1 Table of AI Models Supported by Candidate Base Stations and Measurement Criterion for Cell Reselection**

| Candidate base station | AI model 1 | AI model 2 | AI model 3 | AI model 4 | AI model 5 | AI model 6 | Whether satisfying the measurement criterion for cell reselection |
|---|---|---|---|---|---|---|---|
| gNB1 | Support | | Support | | Support | | |
| gNB2 | | Support | Support | | Support | | Yes |
| gNB3 | | Support | Support | | Support | | Yes, and the signal quality is higher than that of gNB2 |
| gNB4 | Support | Support | | | Support | | Yes |
| gNB5 | Support | | Support | | Support | | Yes |
| gNB6 | Support | | Support | Support | | | Yes |
| gNB7 | Support | Support | | Support | | | Yes |

It can be seen according to Table 1 that models supported by gNB 1 include AI model 1, AI model 3, and AI model 5; models supported by gNB2 include AI model 2, AI model 3, and AI model 5; models supported by gNB3 include AI model 2, AI model 3, and AI model 5; models supported by gNB4 include AI model 1, AI model 2, and AI model 5; models supported by gNB5 include AI model 1, AI model 3, and AI model 5; models supported by gNB6 include AI model 1, AI model 3, and AI model 4; and models supported by gNB7 include AI model 1, AI model 2, and AI model 4.

The solution of the present application will be described below with several specific embodiments in combination with Table 1 respectively.

In an embodiment, the condition that AI models of interest of the UE are AI models 2, 3, and 5 is taken as an example.

First, gNB1 queries and records AI models supported by the candidate base stations around through an Xn interface between base stations. Table 1 illustrates a recording condition.

gNB 1 integrates the AI models supported by the base stations around, and binds the AI models with cell information, etc., such as frequencies of the cells and identifiers of the cells.

gNB1 notifies the UE of the AI model supported by MEC on the RAN side of gNB 1 and the AI models supported by the base stations around through SIB signaling.

According to the broadcast message of gNB1, the UE may learn that gNB2 and gNB3 at frequency point 1 include all AI models of interest of the UE, namely a plurality of cells include a second cell. The UE selects a measurement criterion of performing cell reselection at frequency point 1.

The UE performs measurement for cell reselection at frequency point 1. According to an R criterion, the candidate cells are ordered as follows: gNB5>gNB4>gNB3>gNB2.

The UE considers the AI models of interest and the measurement criterion for cell reselection, and since the signal quality of gNB3 is higher than that of gNB2, the UE selects gNB3 from gNB2 and gNB3 to perform a subsequent operation of cell reselection.

In an embodiment, the condition that AI models of interest of the UE are AI models 1, 2, and 5 is taken as an example.

First, gNB1 queries and records AI models supported by the candidate base stations around through an Xn interface between base stations. Table 1 illustrates a recording condition.

gNB1 integrates the AI models supported by the base stations around, and binds the AI models with cell information, etc., such as frequencies of the cells and identifiers of the cells.

gNB1 notifies the UE of the AI model supported by MEC on the RAN side of gNB 1 and the AI models supported by the base stations around through SIB signaling.

According to the broadcast message of gNB1, the UE may learn that gNB4 at frequency point 1 includes all AI models of interest of the UE. Therefore, the UE selects a measurement criterion of performing cell reselection at frequency point 1.

The LTE performs measurement for cell reselection at frequency point 1. According to an R criterion, the candidate cells are ordered as follows: gNB5>gNB4>gNB3>gNB2.

Considering the AI models of interest and the measurement criterion for cell reselection, the LTE selects gNB4 to perform a subsequent operation of cell reselection.

In an embodiment, the condition that AI models of interest of the UE are AI models 1, 3, and 4 is taken as an example.

First, gNB1 queries and records AI models supported by the candidate base stations around through an Xn interface between base stations. Table 1 illustrates a recording condition.

gNB1 integrates the AI models supported by the base stations around, and binds the AI models with cell information, etc., such as frequencies of the cells and identifiers of the cells.

gNB1 notifies the UE of the AI model supported by MEC on the RAN side of gNB 1 and the AI models supported by the base stations around through SIB signaling.

According to the broadcast message of gNB1, the UE may learn that gNB6 at frequency point 2 includes AI models of interest of the UE, so the UE selects a measurement criterion of performing cell reselection at frequency point 2.

The UE performs measurement for cell reselection at frequency point 2. According to an R criterion, the candidate cells are ordered as follows: gNB7>gNB6.

Considering the AI models of interest and the measurement criterion for cell reselection, the LTE selects gNB6 to perform a subsequent operation of cell reselection.

In an embodiment, the condition that AI models of interest of the UE are AI models 2, 5, 3, and 1 is taken as an example.

First, gNB1 queries and records AI models supported by the candidate base stations around through an Xn interface between base stations. Table 1 illustrates a recording condition.

gNB1 integrates the AI models supported by the base stations around, and binds the AI models with cell information, etc., such as frequencies of the cells and identifiers of the cells.

gNB1 notifies the UE of the AI model supported by MEC on the RAN side of gNB 1 and the AI models supported by the base stations around through SIB signaling.

According to the broadcast message of gNB 1, the LTE may learn that there is no second cell, namely supported models do not include all the models of interest of the UE. The LTE may learn that gNB2, gNB3, gNB4, and gNB5 at frequency point 1 include one or more of the AI models of interest of the UE with high priorities, and the base station indicates that frequency point 1 has a high cell reselection frequency priority, so the UE selects a measurement criterion of performing cell reselection at frequency point 1.

The UE performs measurement for cell reselection at frequency point 1. According to an R criterion, the candidate cells are ordered as follows: gNB5>gNB4>gNB3>gNB2.

Considering the AI models of interest and the measurement criterion for cell reselection, the LTE determines that no proper gNB may include all the AI models of interest of the UE.

Considering a first model priority of the AI models of interest, the UE selects gNB3 from gNB3, gNB4, and gNB5 to perform a subsequent operation of cell reselection.

In an embodiment, the condition that AI models of interest of the UE are AI model 1 and AI model 2 is taken as an example.

First, gNB1 queries and records AI models supported by the candidate base stations around through an Xn interface between base stations. Table 1 illustrates a recording condition.

gNB 1 integrates the AI models supported by the base stations around, and binds the AI models with cell information, etc., such as frequencies of the cells and identifiers of the cells.

gNB1 notifies the UE of the AI model supported by MEC on the RAN side of gNB 1 and the AI models supported by the base stations around through SIB signaling.

According to the broadcast message of gNB1, the UE may learn that gNB4 at frequency point 1 and gNB7 at frequency point 2 include all AI models of interest of the UE, namely a plurality of cells include a second cell. However, gNB1 indicates that frequency point 1 has a high cell reselection frequency priority. Therefore, the UE selects a measurement criterion of performing cell reselection at frequency point 1.

The UE performs measurement for cell reselection at frequency point 1. According to an R criterion, the candidate cells are ordered as follows: gNB5>gNB4>gNB3>gNB2.

Considering the AI models of interest, the UE selects gNB4 to perform a subsequent operation of cell reselection.

In an embodiment, the condition that AI models of interest of the UE are AI model 6 is taken as an example.

First, gNB1 queries and records AI models supported by the candidate base stations around through an Xn interface between base stations. Table 1 illustrates a recording condition.

gNB1 integrates the AI models supported by the base stations around, and binds the AI models with cell information, etc., such as frequencies of the cells and identifiers of the cells.

gNB1 notifies the UE of the AI model supported by MEC on the RAN side of gNB 1 and the AI models supported by the base stations around through SIB signaling.

According to the broadcast message of gNB 1, the LTE may learn that there are no AI models of interest of the UE on RAN sides of all the candidate cells, so the UE selects a measurement criterion of performing cell reselection at frequency point 1 according to a frequency priority indicated by gNB1.

The LTE performs measurement for cell reselection at frequency point 1. According to an R criterion, the candidate cells are ordered as follows: gNB5>gNB4>gNB3>gNB2.

The UE selects gNB5 to perform a subsequent operation of cell reselection.

According to the cell reselection method provided in the embodiment of the present application, the terminal device first receives the cell information of the plurality of cells and the model supported by each cell from the first network device, then determines the first cell from the plurality of cells according to the cell information and the model supported by each cell, and reselects the first cell. Since the first cell is determined by the terminal device according to both the cell information and the model supported by each cell, when the terminal device side requires a model to execute a related service, with this solution, the perception of the terminal device to the model may be enhanced, and the terminal device can preferentially select a cell storing the related model and perform a cell reselection operation. Therefore, the problem that a current cell reselection solution may affect processing of a model related service is solved.

FIG. 5 is a schematic structural diagram of a cell reselection apparatus according to an embodiment of the present application. As shown in FIG. 5, the cell reselection apparatus 50 includes:
a receiving module 51, configured to receive cell information of a plurality of cells and a model supported by each cell from a first network device;
a determining module 52, configured to determine a first cell from the plurality of cells according to the cell information and the model supported by each cell; and
a reselecting module 53, configured to reselect the first cell.

In a possible implementation mode, the receiving module 51 is specifically configured to:
receive a broadcast message from the first network device, where the broadcast message includes the cell information and the model supported by each cell.

In a possible implementation mode, the broadcast message is System Information Block (SIB) signaling or a paging message.

In a possible implementation mode, the cell information includes a frequency of the cell and an identifier of the cell.

In a possible implementation mode, the cell information includes the frequency of the cell; and the determining module 52 is specifically configured to:
receive a cell reselection frequency priority from the first network device; and
determine the first cell from the plurality of cells according to the cell reselection frequency priority, a frequency of each of the plurality of cells, and the model supported by each cell.

In a possible implementation mode, the determining module 52 is specifically configured to:
determine a model list of interest of a terminal device, where the model list includes one or more first models; and
determine the first cell from the plurality of cells according to the cell reselection frequency priority, the frequency of each of the plurality of cells, the model supported by each cell, and the model list.

In a possible implementation mode, the determining module 52 is specifically configured to:
determine whether there is at least one second cell according to the model supported by each cell, where the model supported by the second cell includes all of the first models;
if yes, determine the first cell according to the frequency of each second cell and the cell reselection frequency priority; and
otherwise, determine the first cell from the plurality of cells according to the model supported by each cell and the model list.

In a possible implementation mode, the determining module 52 is specifically configured to:
determine a first frequency of a top priority from the frequency of each second cell according to the cell reselection frequency priority;
obtain a first measurement result of the second cell whose frequency is the first frequency; and
determine the first cell according to the first measurement result.

In a possible implementation mode, the determining module 52 is specifically configured to:
determine, if there is a third cell in the plurality of cells, the first cell from the third cell, where the model supported by each third cell includes at least one first model; and
otherwise, obtain a second measurement result of the plurality of cells, and determine the first cell according to the second measurement result.

In a possible implementation mode, the determining module 52 is specifically configured to:
determine a fourth cell from the third cell according to a first model priority in the model list, where the model supported by the fourth cell includes the first model of a top priority in the first model supported by each third cell, and a frequency of a top cell reselection frequency priority in the frequency of each fourth cell is a second frequency;
obtain a third measurement result of the fourth cell whose frequency is the second frequency; and
determine the first cell according to the third measurement result.

In a possible implementation mode, the receiving module 51 is further configured, for any first model, to:
obtain model information of the model supported by each cell; and
determine whether the model supported by each cell includes the first model according to the model information.

In a possible implementation mode, the model information includes at least one of the following information:
a type of the model;
an application type of the model;
an application scenario of the model;
a size of the model;
accuracy of the model; and
an index of the model.

The apparatus provided in the embodiment of the present application may be configured to execute the technical solution in the method embodiment, and an implementation principle and technical effects thereof are similar, and will not be elaborated.

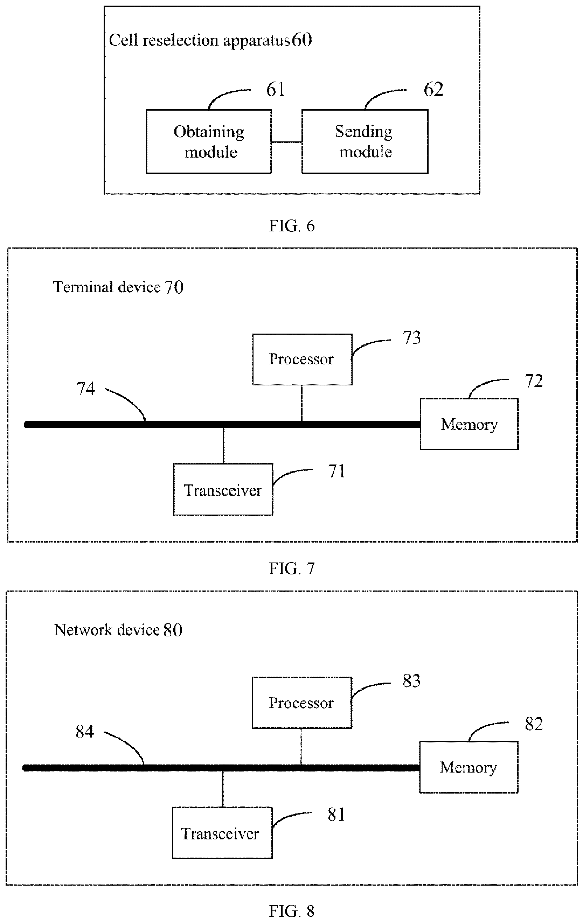

FIG. 6 is a schematic structural diagram of a cell reselection apparatus according to an embodiment of the present application. As shown in FIG. 6, the cell reselection apparatus 60 includes:
an obtaining module 61, configured to obtain cell information of a plurality of cells and a model supported by each cell; and
a sending module 62, configured to send the cell information of the plurality of cells and the model supported by each cell to a terminal device, where the cell information and the model supported by each cell are used to instruct the terminal device to perform cell reselection.

In a possible implementation mode, the sending module 62 is specifically configured to:
send a broadcast message to the terminal device, where the broadcast message includes the cell information and the model supported by each cell.

In a possible implementation mode, the broadcast message is System Information Block (SIB) signaling or a paging message.

In a possible implementation mode, the cell information includes a frequency of the cell and an identifier of the cell.

In a possible implementation mode, the obtaining module 61 is specifically configured to:
send a model request message to at least one second network device;
receive a model response message from the at least one second network device, where the model response message includes a model supported by the second network device; and
obtain the cell information of the plurality of cells and the model supported by each cell according to a model supported by the first network device and the model supported by the second network device, where any one of the plurality of cells is a cell under the first network device or the second network device.

In a possible implementation mode, the obtaining module 61 is specifically configured to:
send the model request message to the at least one second network device according to a preset time interval.

In a possible implementation mode, the obtaining module 61 is further configured to:
receive a model update message from the second network device, where the model update message indicates that the model supported by the second network device changes; and
update, by the first network device, the cell information of the plurality of cells and the model supported by each cell according to the model update message.

The apparatus provided in the embodiment of the present application may be configured to execute the technical solution in the method embodiment, and an implementation principle and technical effects thereof are similar, and will not be elaborated.

FIG. 7 is a schematic structural diagram of a terminal device according to an embodiment of the present application. Referring to FIG. 7, the terminal device 70 may include a transceiver 71, a memory 72, and a processor 73. The transceiver 71 may include a transmitter and/or a receiver. The transmitter may also be referred to as a sender, a sending set, a sending port, a sending interface, or a similar description. The receiver may also be referred to as a receiver, a receiving set, a receiving port, a receiving interface, or a similar description. Illustratively, the transceiver 71, the memory 72, and the processor 73 are connected with one another by a bus 74.

The memory 72 is configured to store a program instruction; and
the processor 73 is configured to execute the program instruction stored in the memory to enable the terminal device 70 to execute any above-mentioned cell reselection method.

The receiver of the transceiver 71 may be configured to execute a receiving function of the terminal device in the cell reselection method.

FIG. 8 is a schematic structural diagram of a network device according to an embodiment of the present application. Referring to FIG. 8, the network device 80 may include a transceiver 81, a memory 82, and a processor 83. The transceiver 81 may include a transmitter and/or a receiver. The transmitter may also be referred to as a sender, a sending set, a sending port, a sending interface, or a similar description. The receiver may also be referred to as a receiver, a receiving set, a receiving port, a receiving interface, or a similar description. Illustratively, the transceiver 81, the memory 82, and the processor 83 are connected with one another by a bus 84.

The memory 82 is configured to store a program instruction; and
the processor 83 is configured to execute the program instruction stored in the memory to enable the network device 80 to execute any above-mentioned cell reselection method.

The receiver of the transceiver 81 may be configured to execute a receiving function of the network device in the cell reselection method.

An embodiment of the present application provides a computer-readable storage medium, storing a computer-executable instruction which, when executed by a processor, is used to implement the cell reselection method.

An embodiment of the present application provides a computer-readable storage medium, storing a computer-executable instruction which, when executed by a processor, is used to implement the cell reselection method.

An embodiment of the present application may also provide a computer program product, which may be executed by a processor. When the computer program product is executed, any above-mentioned cell reselection method executed by a terminal device may be implemented.

The transmission device, computer-readable storage medium, and computer program product in the embodiments of the present application may execute the cell reselection method executed by a network device, and specific implementation processes and beneficial effects thereof refer to the above, and will not be elaborated herein.

In some embodiments provided in the present application, it is to be understood that the disclosed system, apparatus, and method may be implemented in manners. For example, the apparatus embodiment described above is only schematic. For example, division of the units is only logic function division, and other division manners may be used in actual implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the apparatus or the units, and may be electrical and mechanical or use other forms.

The units described as separate parts may or may not be physically separated. Parts displayed as units may or may not be physical units, namely they may be located in the same place, or may also be distributed to multiple network units. Part or all of the units may be selected to achieve the objectives of the solutions of the embodiments as practically required.

In addition, each function unit in each embodiment of the present application may be integrated into a processing unit. Alternatively, each unit may physically exist independently. Alternatively, two or more than two units may be integrated into a unit. The integrated unit may be implemented in a hardware form, or in form of a software function unit.

It can be understood by those of ordinary skill in the art that all or part of the steps of each method embodiment may be completed by a program by instructing related hardware. The computer program may be stored in a computer-readable storage medium. The computer program is executed by a processor to implement the steps of each method embodiment. The storage medium includes various media capable of storing program codes, such as a ROM, a RAM, a magnetic disk, or an optical disk.

It is finally to be noted that the above embodiments are used not to limit but only to describe the technical solutions of the present application. Although the present application is described with reference to each embodiment in detail, those of ordinary skill in the art should know that modifications may be made to the technical solutions recorded in each embodiment or equivalent replacements may be made to part or all of technical features therein. These modifications or replacements do not make the essence of the corresponding technical solutions depart from the scope of the technical solutions of each embodiment of the present application.

## Claims

1. A cell reselection method, comprising:
receiving, by a terminal device, cell information of a plurality of cells and a model supported by each cell from a first network device;
determining, by the terminal device, a first cell from the plurality of cells according to the cell information and the model supported by each cell; and
reselecting, by the terminal device, the first cell.

2. The method of claim 1, wherein the receiving cell information of a plurality of cells and a model supported by each cell from a first network device comprises:
receiving a broadcast message from the first network device, wherein the broadcast message comprises the cell information and the model supported by each cell.

3. The method of claim 2, wherein the broadcast message is System Information Block (SIB) signaling or a paging message.

4. The method of any one of claims 1 to 3, wherein the cell information comprises a frequency of the cell and an identifier of the cell.

5. The method of any one of claims 1 to 4, wherein the cell information comprises the frequency of the cell, and the determining a first cell from the plurality of cells according to the cell information and the model supported by each cell comprises:
receiving a cell reselection frequency priority from the first network device; and
determining the first cell from the plurality of cells according to the cell reselection frequency priority, a frequency of each of the plurality of cells, and the model supported by each cell.

6. The method of claim 5, wherein the determining the first cell from the plurality of cells according to the cell reselection frequency priority, a frequency of each of the plurality of cells, and the model supported by each cell comprises:
determining a model list of interest of the terminal device, wherein the model list comprises one or more first models; and
determining the first cell from the plurality of cells according to the cell reselection frequency priority, the frequency of each of the plurality of cells, the model supported by each cell, and the model list.

7. The method of claim 6, wherein the determining the first cell from the plurality of cells according to the cell reselection frequency priority, the frequency of each of the plurality of cells, the model supported by each cell, and the model list comprises:
determining whether there is at least one second cell according to the model supported by each cell, wherein the model supported by the second cell comprises all of the first models;
if yes, determining the first cell according to the frequency of each second cell and the cell reselection frequency priority; and
otherwise, determining the first cell from the plurality of cells according to the model supported by each cell and the model list.

8. The method of claim 7, wherein the determining the first cell according to the frequency of each second cell and the cell reselection frequency priority comprises:
determining a first frequency of a top priority from the frequency of each second cell according to the cell reselection frequency priority;
obtaining a first measurement result of the second cell whose frequency is the first frequency; and
determining the first cell according to the first measurement result.

9. The method of claim 7, wherein the determining the first cell from the plurality of cells according to the model supported by each cell and the model list comprises:
determining, if there is a third cell in the plurality of cells, the first cell from the third cell, wherein the model supported by each third cell comprises at least one first model; and
otherwise, obtaining a second measurement result of the plurality of cells, and determining the first cell according to the second measurement result.

10. The method of claim 9, wherein the determining, if there is a third cell in the plurality of cells, the first cell from the third cell comprises:
determining a fourth cell from the third cell according to a first model priority in the model list, wherein the model supported by the fourth cell comprises the first model of a top priority in the first model supported by each third cell, and a frequency of a top cell reselection frequency priority in the frequency of each fourth cell is a second frequency;
obtaining a third measurement result of the fourth cell whose frequency is the second frequency; and
determining the first cell according to the third measurement result.

11. The method of any one of claims 6 to 10, wherein for any first model, the method further comprises:
obtaining model information of the model supported by each cell; and
determining whether the model supported by each cell comprises the first model according to the model information.

12. The method of claim 11, wherein the model information comprises at least one of the following information:
a type of the model;
an application type of the model;
an application scenario of the model;
a size of the model;
accuracy of the model; and
an index of the model.

13. A cell reselection method, comprising:
obtaining, by a first network device, cell information of a plurality of cells and a model supported by each cell; and
sending, by the first network device, the cell information of the plurality of cells and the model supported by each cell to a terminal device, wherein the cell information and the model supported by each cell are used to instruct the terminal device to perform cell reselection.

14. The method of claim 13, wherein the sending the cell information of the plurality of cells and the model supported by each cell to a terminal device comprises:
sending a broadcast message to the terminal device, wherein the broadcast message comprises the cell information and the model supported by each cell.

15. The method of claim 14, wherein the broadcast message is System Information Block (SIB) signaling or a paging message.

16. The method of any one of claims 13 to 15, wherein the cell information comprises a frequency of the cell and an identifier of the cell.

17. The method of any one of claims 13 to 16, wherein the obtaining cell information of a plurality of cells and a model supported by each cell comprises:
sending a model request message to at least one second network device;
receiving a model response message from the at least one second network device, wherein the model response message comprises a model supported by the second network device; and
obtaining the cell information of the plurality of cells and the model supported by each cell according to a model supported by the first network device and the model supported by the second network device, wherein any one of the plurality of cells is a cell under the first network device or the second network device.

18. The method of claim 17, wherein the sending a model request message to at least one second network device comprises:
sending the model request message to the at least one second network device according to a preset time interval.

19. The method of claim 17, further comprising:
receiving a model update message from the second network device, wherein the model update message indicates that the model supported by the second network device changes; and
updating, by the first network device, the cell information of the plurality of cells and the model supported by each cell according to the model update message.

20. A cell reselection apparatus, comprising:
a receiving module, configured to receive cell information of a plurality of cells and a model supported by each cell from a first network device;
a determining module, configured to determine a first cell from the plurality of cells according to the cell information and the model supported by each cell; and
a reselecting module, configured to reselect the first cell.

21. A cell reselection apparatus, comprising:
an obtaining module, configured to obtain cell information of a plurality of cells and a model supported by each cell; and
a sending module, configured to send the cell information of the plurality of cells and the model supported by each cell to a terminal device, wherein the cell information and the model supported by each cell are used to instruct the terminal device to perform cell reselection.

22. A terminal device, comprising at least one processor and a memory, wherein
the memory stores a computer-executable instruction; and
the at least one processor executes the computer-executable instruction stored in the memory to enable the at least one processor to execute the cell reselection method of any one of claims 1 to 12.

23. A network device, comprising at least one processor and a memory, wherein
the memory stores a computer-executable instruction; and
the at least one processor executes the computer-executable instruction stored in the memory to enable the at least one processor to execute the cell reselection method of any one of claims 13 to 19.

24. A computer-readable storage medium, storing a computer-executable instruction, a processor, when executing the computer-executable instruction, implements the cell reselection method of any one of claims 1 to 19.
